# EUROPEAN PATENT APPLICATION

(11) **EP 1 081 826 A2**
(43) Date of publication of application: **07.03.2001**
(21) Application number: 00830598.9
(22) Date of filing: 01.09.2000
(51) Int. Cl.: H02K 5/24

(54) **A shock-absorbing system for electric fans to be installed in gas boilers with sealed combustion chamber**

(30) Priority: 03.09.1999 IT AN990041
(71) Applicant: Bafin S.p.A., 60022 Castelfidardo (IT)
(72) Inventor: Bacchiocchi, Alberto, 60022 Castelfidardo (AN) (IT)
(74) Representative: Baldi, Claudio

(57) **Abstract**

the present invention relates to a shock-absorbing system for electric fans to be installed in gas boilers with sealed combustion chamber, in which the spokes of the support stand of the electric motor are inserted in corresponding coupling pins and fastened between a pre-compressed pair of springs inserted in the pins.

## Description

The present patent application relates to a shock-absorbing system for electric fans to be installed in gas boilers with sealed combustion chamber for the production of hot water used to feed heating systems and/or sanitary equipment.

As it is known, this type of highly thermally efficient boilers are characterised by a hermetically sealed combustion chamber and an electric fan that can be installed before or after the chamber, according to the model of boiler.

In the first case, the electric fan is used to suck combustion air from the outside and direct it in the combustion chamber. In the second case, the electric fan is used to suck the fumes of the combustion chamber in order to expel them outside through the flue.

In any case, the scroll housing the fan wheel of the electric fan is usually fixed firmly onto the bearing frame of the boiler, while the support stand of the motor-fan wheel group is fixed onto the external wall of the scroll with the interposition of rubber collars with shock-absorbing function, capable of preventing the transmission of the vibrations from the electric fans to the scroll and from the scroll to the boiler casing that could generate unpleasant noise.

In spite of the shock-absorbing action of the rubber collars, although reduced, the vibrations reach the boiler casing. The manufacturers of electric fans have attempted to solve this inconvenience at source by eliminating the vibrations through the accurate balancing of the motor-fan wheel group.

To this end an additional support has been introduced for the motor-fan wheel group, whose support stand is usually provided with three or four spokes with ending holes used to fix it to the scroll.

The additional support is realised by means of a shelf fixed to the scroll wall under the motor-fan wheel group, whose shaft, most of the time, has a horizontal position when the electric fan is installed.

This means that the spokes of the support stand of the electric motor are arranged on the same vertical plane, while the axes of the collars on which the stand discharges the weight and vibrations of the electric fax orientate themselves according to an horizontal axis parallel to the axis of the rotation shaft of the motor-fan wheel group.

The shelf acts as support for an additional rubber collar with vertical axis - same as the aforementioned collars - which is pre-compressed and introduced between the shelf and the border of the above stand with the purpose of exerting an upward force on the stand to balance, although approximately, the weight of the motor-fan wheel group.

Although the introduction of the additional support for the stand of the electric fan has improved the situation, it cannot guarantee the perfect safe balancing of the electric fan, in spite of the considerable increase in the cost of the group and the expense for fixing it to the scroll.

The purpose of the present invention is to realise a new shock-absorbing system to support the electric fans to be installed in gas boilers with sealed combustion chamber, with higher efficacy and lower cost - both in terms of construction and assembly - compared to the known systems.

To this end, the spokes of the usual support stand of the electric motor are inserted and coupled to corresponding pins that protrude from a wall of the scroll, in which a pre-compressed pair of truncated conical springs is inserted, with the end of each spoke fastened between the springs.

The fastening of each spoke of the stand between a pair of pre-compressed springs results in a double shock-absorbing action of the stand vibrations in both directions.

The shock-absorbing system according to the present invention with pre-compressed truncated conical springs on each spoke of the support stand of the electric motor has proved extremely efficient also in terms of dynamic balancing of the motor-fan wheel group, which can therefore be neglected, unlike the known systems that require the presence of shock-absorbing rubber collars.

All of the above results in the lower construction cost of the electric fan and in the reduction of time and cost when fixing the stand to the scroll. Apart from these economical advantages, the system according to the present invention is also characterised by high functional efficiency, thanks to the considerable reduction of vibrations, resulting in the absence of noise for the electric fan installed in the scroll.

Each pair of springs is inserted in the corresponding pin that protrudes from the scroll and fastened in a simple, fast and economic way, by means of a fixing clip of known type, whose internal radial elements exert friction and force against the external surface of the pins.

For major clarity the description of the support according to the present invention continues with reference to the enclosed drawings, which are intended for purposes of illustration and not in a limiting sense, whereby:
- Fig. 1 is a plan view of an electric fan using the shock-absorbing system according to the present invention;
- Fig. 2 is a side view of Fig. 1 according to II-II direction;
- Fig. 3 is a side view of Fig. 2 according to III-III direction;
- Fig. 4 is an enlarged view of a detail of Fig. 2.

The aforementioned figures illustrate a traditional electric fan comprising an electric motor (1), on whose shaft a fan wheel (2) is aligned and housed inside a scroll (3).

The electric motor (1) is mounted externally on a wall of the scroll (3), from which pins (4) with longitudinal axis parallel to the rotation axis of the motor-fan wheel group protrude.

The motor (1) is supported by a stand (5) with multiple spokes, with each spoke provided with an ending hole in which the pins are inserted with clearance.

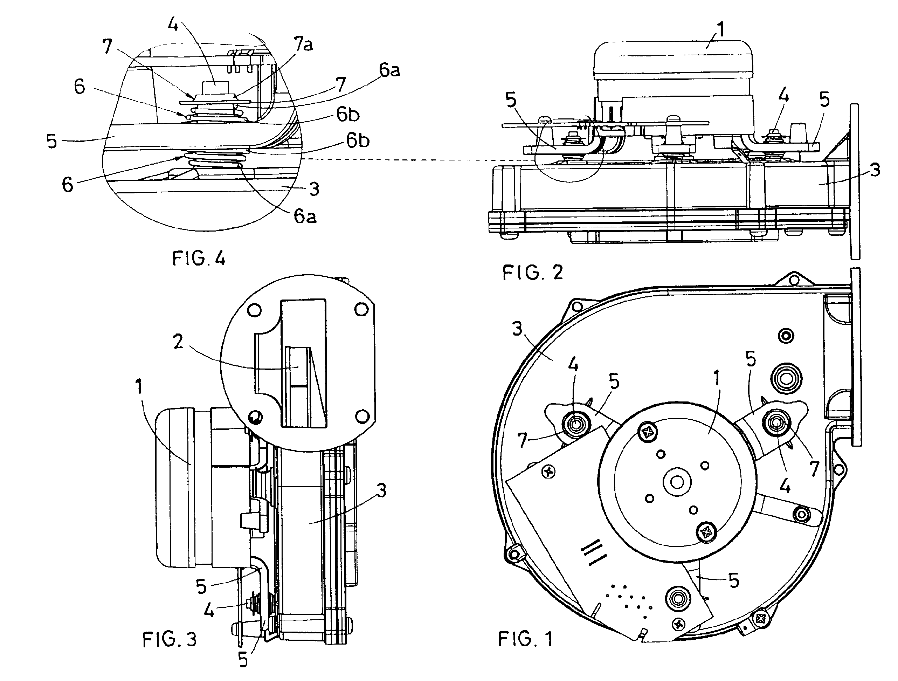

As shown in Fig. 4, a pre-compressed pair of springs (6) is inserted in each pin (4) and the spoke of the stand (5) is fastened between the springs.

Each pair of springs (6) is fastened on the corresponding pin (4) by means of a fixing clip (7), whose internal radial elements (7a) exert friction and force against the external surface of the pins (4).

The springs (6) have a truncated conical shape and the turn with lower diameter (6a) fastens the pin (4), while the turn with higher diameter (6b) is engaged against the support stand (5).

The fastening of the spokes of the stand (5) within an opposite pair of pre-compressed truncated conical springs (6) allows for reducing the vibrations of the stand (5) in axial direction in both directions and in radial direction with respect to the rotation axis of the motor-fan wheel group.

## Claims

1. A shock-absorbing system for electric fans to be installed in gas boilers with sealed combustion chamber, of the type comprising a stand (5) with multiple spokes used to support the electric motor (1) that operates the fan wheel (2) housed inside the scroll (3) from which some pins (4) externally protrude with the capability of being inserted with clearance in suitable holes provided at the end of the spokes, characterised in that a pre-compressed pair of springs (6) is inserted in each pin (4) and the spoke of the stand (5) is fastened between the springs; it being also provided that the springs (6) have a truncated conical shape and the turn with lower diameter fastens the pin (4), while the turn with higher diameter (6b) is engaged against the support stand (5).

2. A shock-absorbing system according to the previous claim, characterised in that each pair of springs (6) is fastened on its corresponding pin (4) by means of a fixing clip (7).
